# EUROPÄISCHE PATENTSCHRIFT

(11) **EP 1 086 882 B1**
(45) Veröffentlichungstag und Bekanntmachung des Hinweises auf die Patenterteilung: **14.07.2004**
(21) Anmeldenummer: 00116496.1
(22) Anmeldetag: 31.07.2000
(51) Int. Cl.: B62D 25/06, B62D 65/00, B60R 13/02

(54) **Verbundbauteil für Fahrzeugkarosserien**
Composite member for vehicle bodies
Elément composite pour carrosseries de véhicule

(30) Priorität: 27.09.1999 DE 19946008
(43) Veröffentlichungstag der Anmeldung: 28.03.2001
(73) Patentinhaber: ArvinMeritor GmbH, 63128 Dietzenbach (DE)
(72) Erfinder: Grimm, Rainer, Dipl.-Ing., 60599 Frankfurt (DE); Böhm, Horst, Dipl.-Ing., 60599 Frankfurt (DE)
(74) Vertreter: Oppermann, Mark, Dipl.-Ing.

(56) Entgegenhaltungen:
- EP-A- 0 302 702
- DE-A- 19 629 115
- US-A- 4 444 705
- PATENT ABSTRACTS OF JAPAN vol. 011, no. 105 (M-577), 3. April 1987 (1987-04-03) & JP 61 253214 A (NISSAN MOTOR CO LTD), 11. November 1986 (1986-11-11)

## Beschreibung

Die Erfindung bezieht sich auf ein Verbundbauteil für Fahrzeugkarosserien, insbesondere für Fahrzeugdächer, entsprechend dem Oberbegriff des Patentanspruchs 1 (siehe US-A-4 444 705).

Erfindungsgemäß ausgebildete Verbundbauteile sind grundsätzlich für alle äußeren und inneren plattenförmigen Strukturen von Fahrzeugkarosserien, einschließlich der Hauben, Türen und Klappen/Deckel, geeignet, für die neben einer ausreichenden Beulsteifigkeit und Festigkeit wie Biegefestigkeit und Torsionsfestigkeit bei geringem Gewicht gute Wärme- und/oder Schallisolationseigenschaften verlangt werden. Wenn nachfolgend durchweg von Fahrzeugdächern und Fahrzeugdachteilen die Rede ist, handelt es sich zwar um den bevorzugten Anwendungsort der Erfindung, jedoch ohne darauf beschränkende Bedeutung.

Verbundbauteile bedürfen in der Regel der Abdichtung gegenüber angrenzenden Karosseriebauteilen. Bei einer solchen Abdichtung kann es sich um eine nach Anbringung des betreffenden Verbundbauteils ständige Abdichtung gegenüber einem angrenzenden Karosseriebauteil, beispielsweise der Randabdichtung eines vorgefertigten Dachmoduls gegenüber dem Dachrahmen einer Kraftfahrzeugkarosserie, oder um eine zeitweilige Abdichtung des Verbundbauteils gegenüber dem angrenzenden Karosseriebauteil handeln, wie sie beispielsweise zwischen dem Schiebe- und/oder Hebedeckel und den Dachöffnungsrändern einer Schiebe- und/oder Hebedachkonstruktion eines Fahrzeugs gegeben ist.

Abdichtungsanordnungen der in Rede stehenden Ausführungen sind in der Regel an den Rändern oder in Randnähe der Verbundbauteile vorgesehen. Zu diesem Zweck werden nach dem Stand der Technik gummielastische Dichtungsprofile auf Vorsprünge oder Ränder des Verbundbauteils aufgesteckt, die sich bei Anbringung des Verbundbauteils dicht an das angrenzende Karosseriebauteil anlegen (FR-PS 82 11905 Fig. 5, EP 0 300 889 B1 Fig. 3). Bei anderen bekannten Ausführungen sind im Verbundbauteil Aufnahmenuten vorgesehen, welche der Aufnahme eines Kleberwulstes dienen, der das Verbundbauteil abgedichtet am angrenzenden Karosseriebauteil befestigt (DE 32 02 594 C2). Schließlich sind auch noch Anordnungen vorgeschlagen worden, bei denen zwischen Verbundbauteil und Karosseriebauteil bei der Montage Dichtungen eingelegt werden (DE 29 29 915 A1 Fig. 2, GM 79 29 367 Ul Fig. 5, 6). Allen bekannten Anordnungen gemeinsam ist die Notwendigkeit, die erforderlichen Abdichtungen/Dichtungsprofile nach Fertigstellung des Verbundbauteils in zusätzlichen Arbeitsschritten vor der Montage an der Fahrzeugkarosserie anzubringen.

Der Erfindung liegt die Aufgabe zugrunde, ein Verbundbauteil der angegebenen Art so auszubilden, daß bei seiner Montage an einer Fahrzeugkarosserie bzw. einem Karosseriebauteil keine zusätzlichen Abdichtungsmaßnahmen zu treffen sind.

Die gestellte Aufgabe wird durch die im Patentanspruch 1 angegebene Erfindung gelöst. Vorteilhafte oder zweckmäßige Weiterbildungen an unterschiedlichen Verbundbauteilen gehen aus den Unteransprüchen hervor und sind nachfolgend ebenfalls erläutert.

Nach dem Grundgedanken der Erfindung ist an die Kunststoffschicht des Verbundbauteils eine Dichtung angeschäumt, so daß nach dem Aufschäumen der Kunststoffschicht auf der Innenseite der starren Schicht das Verbundbauteil bereits mit einer integrierten Dichtung versehen ist, die das Verbundbauteil gegenüber angrenzenden Karosseriebauteilen abdichtet. Die Ausformung eines Aufsteckrandes oder -vorsprungs an dem Verbundbauteil sowie das Aufstecken einer zusätzlichen zunächst getrennt bereitzustellenden Dichtung auf das fertige Verbundbauteil entfallen daher, wodurch eine kostengünstige Fertigung eines einbaufertigen Verbundbauteils ermöglicht wird.

Die Dichtung kann in einer ersten Ausführungsform der Erfindung gemäß Anspruch 2 aus einem elastomeren Material, beispielsweise Moosgummi, jedenfalls aus einem anderen Material als das der auf die starre Schicht aufgeschäumten Kunststoffschicht geformt sein, wobei das Anschäumen nur an einem Teilbereich des Umfangs der Dichtung erfolgt, während der freiliegende Umfangsbereich der Dichtung der abdichtenden Anlage an angrenzenden Karosseriebauteilen dient.

Die Dichtung kann in einer zweiten Ausführungsform der Erfindung gemäß Anspruch 3 auch unmittelbar aus dem Material der aufgeschäumten Kunststoffschicht und damit einteilig und gleichzeitig geformt sein, wobei sie über den Rand der starren Schicht lippenförmig vor- oder übersteht. Dadurch wird eine elastische Abdichtlippe gebildet, die sich unter Vorspannung einer Fläche eines angrenzenden Karosseriebauteils abdichtend anlegen kann, beispielsweise bei einem als Verbundbauteil ausgebildeten Fahrzeugdachmodul der Außenfläche der Windschutzscheibe und/oder der Heckscheibe.

Die erste Ausführungsform der Erfindung umfaßt mehrere Varianten. Gemäß der in Anspruch 4 angegebenen Variante ist die als Hohlkammerprofil u.dgl. ausgebildete Dichtung nur mit ihrem Befestigungsflansch durch Anschäumen in die Kunststoffschicht des Verbundbauteils eingebettet, so daß der zur Abdichtung gegenüber einem benachbarten Karosseriebauteil elastisch verformbare Bereich der Dichtung freiliegt. Dabei ist es von Vorteil, wenn entsprechend Anspruch 5 wenigstens der Befestigungsflansch aus einem Material, beispielsweise aus Ethylen-Propylen-Dien-Polymethylen (EPDM), gebildet ist, das beim Anschäumen mit dem Anschäummaterial, beispielsweise einem Polyurethan (PUR), keine Bindung eingeht, so daß die Dichtung austauschbar ist, weil der Befestigungsflansch aus seiner durch den Anschäumvorgang gebildeten Aufnahmevertiefung herausgezogen werden kann. Eine in ihren Abmessungen entsprechende neue Dichtung kann dann mit ihrem Befestigungsflansch in die Aufnahmevertiefung eingeführt werden. Hierbei ist es zweckmäßig, den Befestigungsflansch mit Rippen zu versehen, d.h. nach Art eines sogenannten Tannenbaumprofils auszugestalten, wie das im Anspruch 6 angegeben ist. Diese Rippen greifen mit durch den Anschäumvorgang gebildeten hinterschnittenen Vertiefungen der geschäumten Kunststoffschicht des Verbundbauteils ein, wodurch eine gute Sicherung gegen unbeabsichtigtes Herausziehen des Befestigungsflansches erreicht wird.

Eine weitere Variante geht aus Anspruch 7 hervor. Hierbei weist die beispielsweise für ein Dachmodul bestimmte Dichtung einen zweischenkligen U-förmigen Querschnitt auf und ist auf eine Aufkantung des Randes der starren Schicht des Verbundbauteils aufgesteckt. Der innere Schenkel der Dichtung ist an die Kunststoffschicht angeschäumt, während der äußere Schenkel die Dichtungsfläche oder die Dichtungsflächen bildet, die zur dichten Anlage an benachbarte Flächen der Karosserie bestimmt ist bzw. sind.

Die vorstehend mit zwei Varianten erläuterte erste Ausführungsform der Erfindung bietet den zusätzlichen Vorteil, daß die Dichtung beim Anschäumvorgang gegenüber dem aufschäumenden Kunststoff abdichtet, und zwar gemäß Anspruch 8 zwischen den beiden Werkzeugteilen der Schäumform, gemäß Anspruch 9 zwischen einer Aufkantung der starren Schicht und einem Werkzeugteil und gemäß Anspruch 10 zwischen einer Aufkantung der starren Schicht und einem mit der Aufkantung fluchtenden Flansch eines angeschäumten Führungs- und/oder Versteifungsprofils für das Verbundbauteil. Bei der Ausführung gemäß Anspruch 10 ist zwischen Aufkantung und Flansch ein Durchtrittsspalt für den Befestigungsflansch der Dichtung vorgesehen. Diese Anordnung ist besonders für ein als Verbundbauteil ausgebildetes Dachmodul geeignet, wobei hierbei das Führungs- und/oder Versteifungsprofil von den Rahmenelementen einer Schiebedachkonstruktion gebildet wird.

Die erfindungsgemäß an das Verbundbauteil angeschäumte Dichtung dient der Verhinderung des Eindringens von Feuchtigkeit und Verunreinigungen in die Spalträume zwischen benachbarten Karosseriebauteilen.

Weitere Einzelheiten der Erfindung werden nachfolgend anhand der Ausführungsbeispiele zum Teil schematisch darstellenden Zeichnungen näher erläutert. Darin zeigt:
- Fig. 1: In perspektivischer Darstellung den Dachbereich eines Kraftfahrzeugs mit Dachmodul und in das Dachmodul integriertem Schiebedach,
- Fig. 2: einen abgebrochenen Schnitt entlang der Linie II-II in Fig. 1,
- Fig. 3: einen abgebrochenen Schnitt durch ein ähnliches Dachmodul mit Führungsprofil und Randspaltdichtung während des Aufschäumvorgangs in einem geschlossenen zweiteiligen Schäumwerkzeug,
- Fig. 4: einen der Fig. 3 ähnlichen Schnitt durch ein Dachmodul ohne angeschäumtes Führungsprofil, aber angeschäumter Randspaltdichtung während des Aufschäumvorgangs in einem geschlossenen zweiteiligen Schäumwerkzeug,
- Fig. 5: einen abgebrochenen Schnitt durch einen Glasdeckel eines Schiebedachs mit angeschäumtem Kunststoffrand, eingeschäumtem Versteifungsprofil und angeschäumter Randspaltdichtung während des Aufschäumvorgangs in einem geschlossenen zweiteiligen Schäumwerkzeug,
- Fig. 6: einen der Fig. 5 ähnlichen abgebrochenen Schnitt in einer Ausbildungsalternative,
- Fig. 7: in perspektivischer Darstellung den Dach- und Türbereich eines Kraftfahrzeugs mit einem Dachmodul, das ohne Schiebedach ausgeführt ist,
- Fig. 8: einen abgebrochenen Schnitt entlang der Linie VIII-VIII in Fig. 7 durch den Dachbereich und das Dachmodul mit angeschäumter Dichtung,
- Fig. 9: einen abgebrochenen Schnitt durch das Dachmodul mit angeschäumter Dichtung gemäß Fig. 8 während des Aufschäumvorgangs in einem geschlossenen zweiteiligen Schäumwerkzeug,
- Fig. 10: einen abgebrochenen Schnitt entlang der Linie X-X gemäß Fig. 7 durch das Dachmodul mit einteilig angeschäumter lippenförmiger Dichtung und
- Fig. 11: einen abgebrochenen Schnitt entlang der Linie XI-XI gemäß Fig. 7 durch das Dachmodul und den Türbereich mit an das Dachmodul angeschäumter Türdichtung.

Die hier verwendete Bezeichnung "Schiebedach" soll für die Zwecke der vorliegenden Erfindung nicht nur solche Konstruktionen einschließen, bei denen der Deckel nach Absenken seiner Hinterkante zur Freigabe der Dachöffnung unter die hintere feste Dachfläche verschiebbar ist, sondern auch Schiebehebedächer, bei denen der Deckel außerdem ausgehend von seiner Schließstellung um eine in der Nähe seiner Vorderkante vorgesehene Schwenkachse zur Ausstellung über die feste Dachfläche verschwenkt werden kann. Auch vorn scharnierte lüftungsklappenähnlich ausstellbare Deckel und sogenannte Oberfirstschiebedächer, bei denen der Deckel nach Anheben seiner Hinterkante teilweise zur Freigabe der Dachöffnung über die hintere feste Dachfläche verschiebbar ist, sollen eingeschlossen sein.

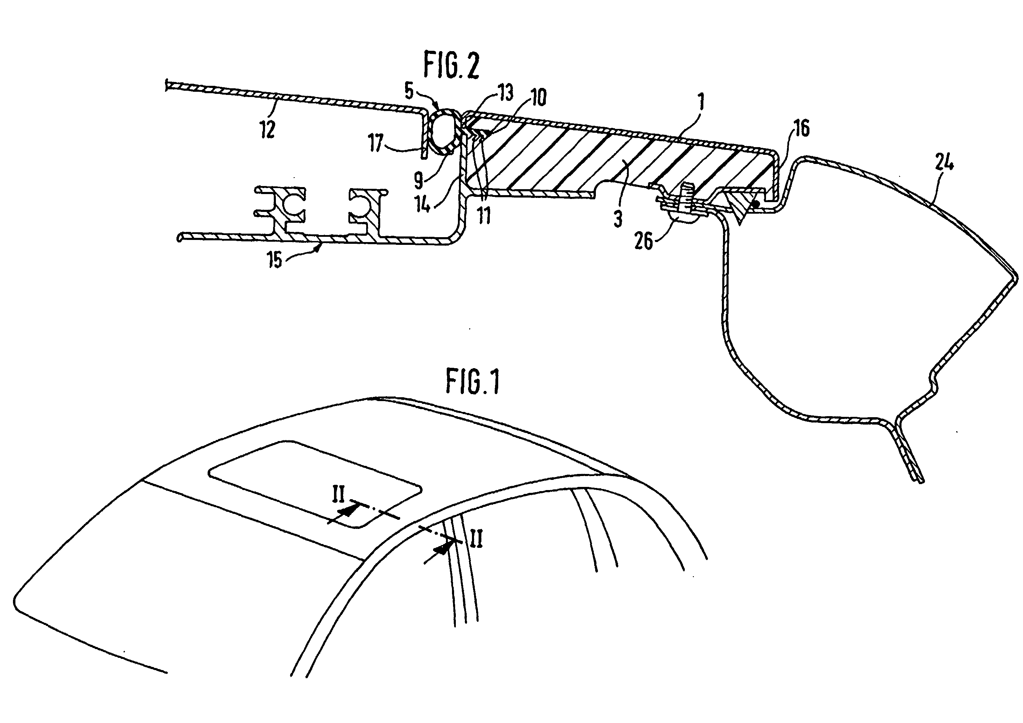

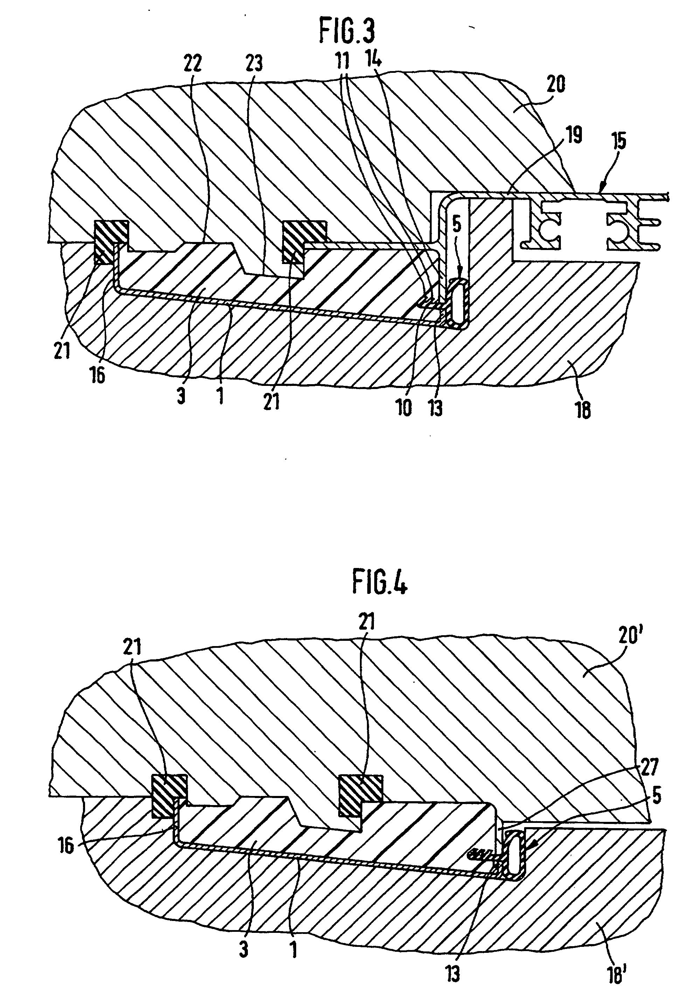

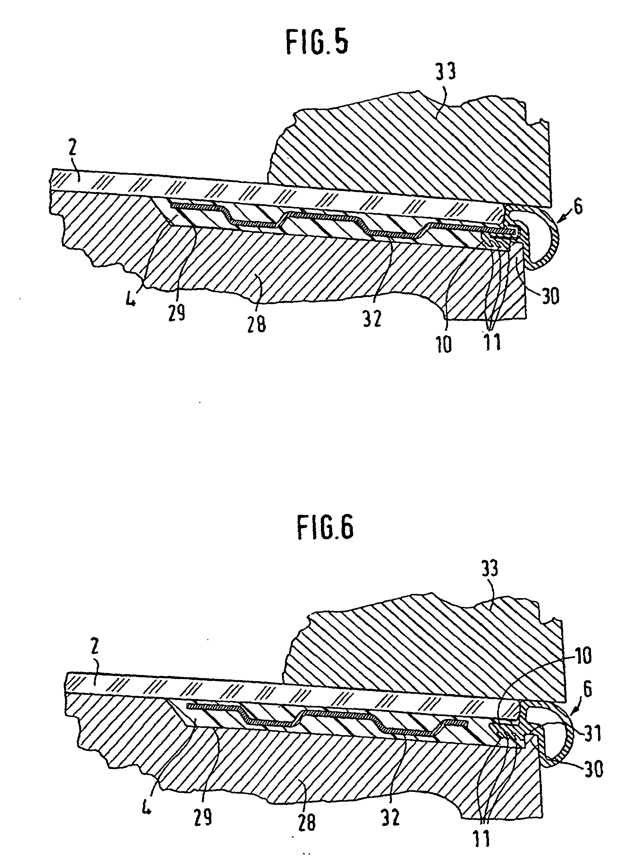

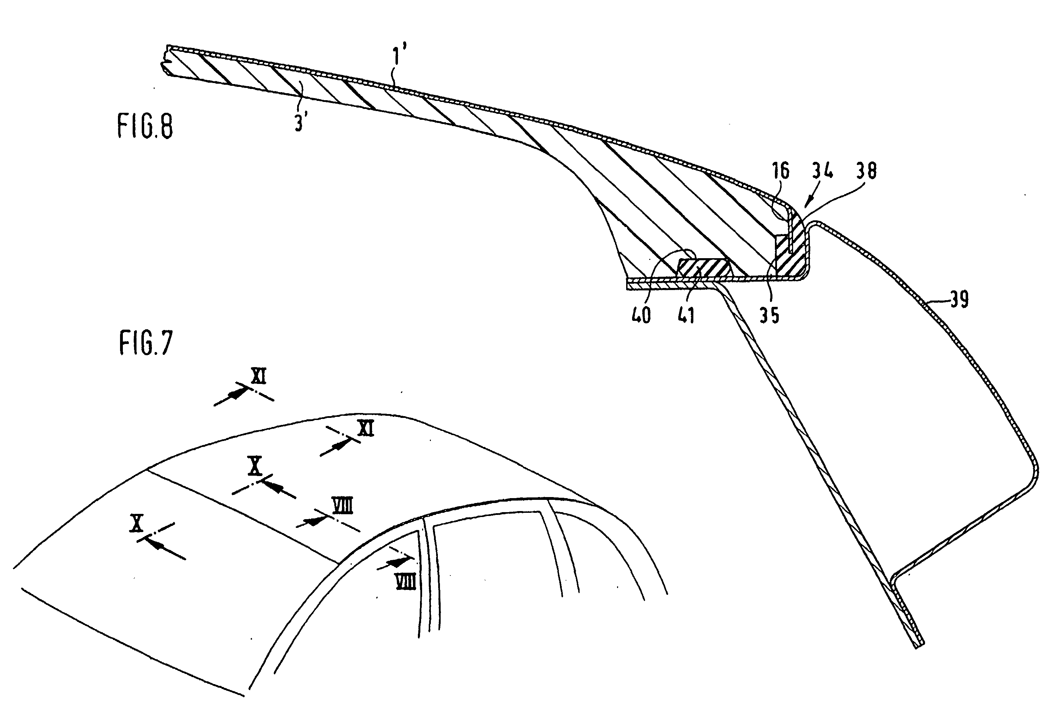

Bei den Figuren 1 bis 4 und 7 bis 11 ist das Verbundbauteil jeweils ein vollständiges Dachmodul, während das Verbundbauteil der Figuren 5 und 6 ein Glasdeckel eines Schiebedachs ist.

Bei den Dachmodulen mit Schiebedach gemäß den Figuren 2 bis 4 befindet sich die Randspaltdichtung zur Abdichtung des Randspalts zwischen der Dachöffnung und dem Deckel am Dachmodul, während bei den Deckelausbildungen gemäß den Figuren 5 und 6 die umgekehrte Anordnung vorliegt, d.h. hierbei befindet sich die Randspaltdichtung am Deckel.

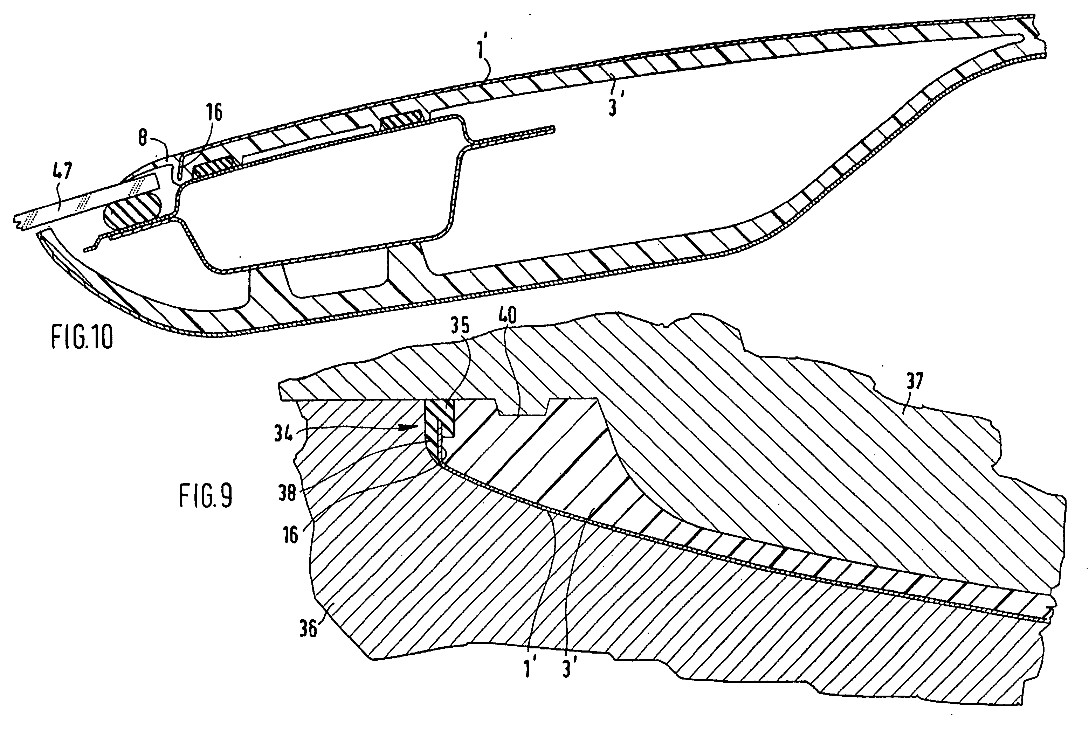

Bei dem als Dachmodul ausgebildeten Verbundbauteil ist die starre Schicht die Außenhaut 1 bzw. 1', welche aus einem Metallblech, z.B. aus Aluminium oder Stahl, oder aus einer thermoplastischen Kunststoffolie, z.B. einer zweischichtigen Koextrusionsfolie aus PMMA und PC/ASA, geformt ist. Bei dem als Glasdeckel 2 ausgebildeten Verbundbauteil ist die starre Schicht der Glasdeckel selbst. Die auf die Außenhaut 1, 1' und dem Glasdeckel 2 aufgeschäumte Kunststoffschicht 3 (Fig. 2-4) bzw. 3' (Fig. 8-11) bzw. 4 (Fig. 5, 6) besteht aus einem PUR-Schaum, der aus einem Polyol und einem Isocyanat besteht, die beispielsweise in einem Verhältnis von 1:2 gemischt sind.

Die aufgeschäumte Kunststoffschicht 3, 3', 4 kann mit einer darin eingebetteten Armierung bestehend aus Fasern, z.B. Glasfasern, Geweben, Gewirken, Vliesen, Gittern u.dgl., versehen sein, welche im Zusammenwirken mit der Außenhaut die Formstabilität und Festigkeit des Verbundbauteils erhöht.

In den Figuren 3, 4 und 9 ist das Verbundbauteil für den Schäumvorgang jeweils mit seiner Innenseite nach oben gekehrt dargestellt, während die Figuren 2, 8, 10 und 11 jeweils die montierte Lage wiedergeben. Bei dem in den Figuren 5 und 6 dargestellten Verbundbauteil stimmen Schäumlage und Montagelage überein.

Bei allen nachfolgend näher beschriebenen Ausführungsformen und Varianten davon ist an der Kunststoffschicht 3, 3', 4 eine Dichtung angeschäumt. Die Dichtungen 5 bzw. 6 bzw. 7 der ersten Ausführungsform in den Figuren 2 bis 9 und 11 sind aus einem elastomeren Material, z.B. Moosgummi oder EPDM, mit jeweils durchgehend gleichbleibendem Profilquerschnitt geformt und sind mit einem Teilbereich ihres Umfangs an die Kunststoffschicht 3, 3', 4 angeschäumt, wie nachstehend noch näher beschrieben wird. Bei der zweiten Ausführungsform gemäß Fig. 10 ist die Dichtung 8 dagegen aus dem Material der Kunststoffschicht 3' selbst und damit einteilig geformt und steht über den Rand der starren Schicht 1' lippenförmig über.

Die in den Ausführungsbeispielen nach den Figuren 2 bis 6 verwendeten Dichtungen 5, 6 sind Hohlkammerdichtungen, bestehend aus einem die Hohlkammer einschließenden Schlauchprofil 9 und einem davon abstehenden und damit einteiligen Befestigungsflansch 10. Lediglich der von dem Befestigungsflansch 10 gebildete Teilbereich des Dichtungsumfangs wird beim Anschäumen in die Kunststoffschicht 3, 4 eingebettet.

Die Hohlkammerdichtung kann über ihren gesamten Querschnitt aus demselben elastomeren Material bestehen oder aber auch aus unterschiedlichen Materialien koextrudiert sein. Beispielsweise können das Schlauchprofil 9 einerseits und der Befestigungsflansch 10 andererseits im Material unterschiedlich sein. Vorzugsweise ist die Hohlkammerdichtung wenigstens im Bereich ihres Befestigungsflansches 10 aus einem Material geformt, das beim Ausschäumen mit dem Material der Kunststoffschicht 3, 4 keine Bindung eingeht, so daß die Hohlkammerdichtung austauschbar ist. Hierbei kann der Befestigungsflansch 10 mit Rippen 11 versehen sein, wie das am besten aus den Figuren 5 und 6 ersichtlich ist. Diese Rippen 11 greifen lösbar mit durch das Anschäumen gebildeten komplementären hinterschnittenen Vertiefungen in der Kunststoffschicht 3, 4 formschlüssig ein. Dadurch wird der Dichtung einerseits in der Kunststoffschicht ein fester Halt vermittelt, der ein unbeabsichtigtes Lösen der Dichtung aus ihrer Anschäumposition verhindert, andererseits läßt sich die Dichtung jedoch mit dem dafür erforderlichen Kraftaufwand gegen den Widerstand des Formschlusses zwischen den Rippen und den Vertiefungen aus der Kunststoffschicht herausziehen, wenn die Dichtung ausgewechselt werden soll oder muß. Hierbei bleiben die Vertiefungen erhalten, so daß diese bei Einführung eines komplementären Befestigungsflansches der neuen Dichtung wieder einen Formschluß mit den Rippen des neuen Befestigungsflansches eingehen.

Bei der in den Figuren 2 und 3 dargestellten Variante der ersten Ausführungsform, bei welcher die Dichtung 5 eine zur Abdichtung des Randspalts zwischen dem aus der starren Schicht 1 und der Kunststoffschicht 3 bestehenden, ein Fahrzeugdachmodul bildenden Verbundbauteil und dem Schiebedeckel 12 wie beschrieben als Hohlkammerdichtung ausgebildet ist, kommt der Dichtung 5 bei dem Aufschäumvorgang eine wichtige zusätzliche Aufgabe zu. Die Dichtung 5 ist nämlich bei dem Aufschäumen der Kunststoffschicht 3 zugleich Abdichtelement zwischen einer inneren um eine den Schiebedeckel 12 aufnehmenden Dachöffnung umlaufende Aufkantung 13 der Außenhaut 1 und einem mit der Aufkantung 13 fluchtenden Flansch 14 eines die Kunststoffschicht 3 teilweise begrenzenden angeschäumten Führungs- und Versteifungsprofils 15. Die Anordnung ist hierbei so getroffen, daß zwischen Aufkantung 13 und Flansch 14 ein Durchtrittsspalt für den Befestigungsflansch 10 der Hohlkammerdichtung vorhanden ist.

Die Außenhaut 1 besitzt auch eine um das Dachmodul umlaufende äußere Aufkantung 16, die in der gleichen Richtung wie die innere Aufkantung 13 abgewickelt ist. Der Schiebedeckel 12 ist im gezeichneten Beispiel ein aus Blech mit umlaufendem Abkantrand 17 geformter Deckel. Die Dichtung 5 liegt bei geschlossenem Fahrzeugdach dem Abkantrand 17 dicht an, wie Fig. 2 verdeutlicht. Allerdings könnte der Deckel 12 auch ein Glasdeckel sein, an welchem eine entsprechende Anlagefläche für die Dichtung 5 angeordnet ist. Die wie beschrieben armierte Kunststoffschicht 3 erstreckt sich bis an die Abkantungen 13 und 16 heran, wodurch das Dachmodul eine ausreichende Steifigkeit erhält.

Bei der Herstellung des Dachmoduls wird die schon fertig geformte Außenhaut 1 in das Unterteil 18 des in Fig. 3 dargestellten Schäumwerkzeugs eingelegt, worauf die Hohlkammerdichtung 5 in die in Fig. 3 gezeigte Lage gebracht wird, mit dem Befestigungsflansch 10 nach innen weisend. Danach wird das beispielsweise aus einer Aluminiumlegierung stranggepreßte Führungs- und Versteifungprofil 15, welches Bestandteil einer Mechanik zur Verlagerung des Schiebedeckels 12 gegenüber der Dachöffnung ist, in das Unterteil 18 eingelegt, wobei die innere Aufkantung 13 mit dem Flansch 14 des Profils 15 fluchtet. Es ist ersichtlich, daß die Dichtung 5 im Schäumwerkzeug den Spalt zwischen dem Flansch 14 und der Aufkantung 13 schließt, so daß der aufschäumende Kunststoff hier nicht austreten kann.

Das Führungs- und Versteifungsprofil 15 begrenzt im in Fig. 3 dargestellten geschlossenen Zustand der Schäumform den sich durch den aufschäumenden Kunststoff füllenden Hohlraum in der Schäumform, wobei das Führungs- und Versteifungsprofil 15 mit einem Schenkel 19 zwischen dem Unterteil 18 und dem Oberteil 20 der Schäumform unverrückbar festgelegt ist. Um zu verhindern, daß beim Schäumvorgang der mit Glasfasern beladene aufschäumende Kunststoff zwischen dem Unterteil 18 und dem Oberteil 20 der Schäumform aus- bzw. durchtritt, sind aus vorzugsweise EPDM bestehende Dichtungen 21 mit geeignetem Querschnitt sowohl an dem Ende der Aufkantung 16 als auch am inneren Ende des Führungs- und Versteifungsprofils 15 vorgesehen. Schließlich werden durch geeignete Ausbildung des Oberteils 20 der Schäumform eine Nut 22 sowie eine Auflagefläche 23 als Funktionsabschnitte des Fahrzeugdachs beim Schäumvorgang gleich mit erzeugt. Die Nut 22 dient bei Montage des modulartigen Fahrzeugdachs am Fahrzeug der Aufnahme einer Klebstoffraupe, mittels der das Fahrzeugdach am fahrzeugseitigen Dachrahmen 24 (Fig. 2) befestigt wird, während die Auflagefläche 23 im montierten Zustand des Fahrzeugdachs dem Dachrahmen 24 definiert aufliegt.

Im fertigen Zustand des Fahrzeugdachs ist das Führungs- und Versteifungsprofil 15 flächig an der Kunststoffschicht 3 angeschäumt, so daß das Profil 15 fest mit dem Fahrzeugdach verbunden ist, ohne daß hierzu weitere Befestigungsmittel notwendig wären. Bei der in Fig. 2 gezeigten Variante ist an die Kunststoffschicht 3 noch zusätzlich im Bereich der Nut 22 und der Auflagefläche 23 ein entsprechend profiliertes Befestigungsblech 24 angeschäumt, welches dem Dachrahmen 24 aufliegt und damit durch Schrauben 26 fest verbunden ist.

Das Ausführungsbeispiel gemäß Fig. 4 unterscheidet sich von demjenigen gemäß den Figuren 2 und 3 nur dadurch, daß hierbei kein Führungs- und Versteifungsprofil an die Kunststoffschicht 3 angeschäumt wird. Anstelle des Flansches 14 ist hierbei das Oberteil 20' der Schäumform mit einer nach unten weisenden Formleiste 27 versehen, die mit der inneren Aufkantung 13 der Außenhaut 1 fluchtet. Die Dichtung 5 ist beim Aufschäumen der Kunststoffschicht 3 das Abdichtelement zwischen der Aufkantung 13 und dem die Kunststoffschicht 3 mit der Formleiste 27 begrenzenden Oberteil 20' der Schäumform.

Bei den Ausführungsbeispielen gemäß den Figuren 5 und 6 ist in dem Unterteil 28 der Schäumform ein Hohlraum 29 vorgesehen, welcher Form und Abmessungen der rahmenartig ausgebildeten und auf die Unterseite des Glasdeckels 2 aufgeschäumten Kunststoffschicht 4 bestimmt. Nach außen hin wird der Hohlraum 29 teilweise von einem durchlaufenden Vorsprung 30 begrenzt, welcher auch die als Hohlkammerdichtung ausgebildete Dichtung 6 in definierter Lage aufnimmt, wozu die Dichtung 6 mit einer entsprechenden Aufnahmenut 31 versehen ist. Bei beiden Ausführungsvarianten gemäß den Figuren 5 und 6 befindet sich in der auf den Glasdeckel 2 aufgeschäumten Kunststoffschicht 4 ein aus Blech gebildetes Verstärkungsprofil 32. Bei der Variante gemäß Fig. 5 ist die Dichtung 6 mit einer weiteren Nut auf eine Seitenkante des Verstärkungsprofils 32 aufgesteckt, so daß die Dichtung 6 zusammen mit dem Verstärkungsprofil 32 in die Form eingelegt werden kann. Bei der Variante nach Fig. 6 sind das Verstärkungsprofil 32 und die Dichtung 6 nicht miteinander verbunden und werden daher getrennt in das Unterteil 28 der Schäumform eingelegt. Das Oberteil 33 der Schäumform liegt bei beiden Varianten unmittelbar der Oberseite des Glasdeckels 2 und der Dichtung 6 an. Bei geschlossener Schäumform bildet die Dichtung 6 beim Aufschäumen der Kunststoffschicht 4 das Abdichtelement zwischen Unterteil 28 und Oberteil 33 der Schäumform.

Bei der in den Figuren 8 und 9 dargestellten zweiten Variante der ersten Ausführungsform ist auf die umlaufende Aufkantung 16 der ohne Dachöffnung ausgebildeten Außenhaut 1 des ein Dachmodul bildenden Verbundbauteils eine ebenfalls umlaufende Dichtung 34 aufgesteckt, die einen zweischenkligen, im wesentlichen U-förmigen Querschnitt aufweist. Wie aus Fig. 9 hervorgeht, wird die Dichtung 34 schon beim Aufschäumen der Kunststoffschicht 3' auf der bereits randbeschnittenen Außenhaut 1 mit an die Kunststoffschicht 3' angeschäumt, und zwar mit ihrem inneren Schenkel 35, der sich nur über einen Teil der Gesamthöhe der Aufkantung 16 erstreckt, damit die armierte Kunststoffschicht 3' auch bis zur Aufkantung 16 reichen kann. Beim Schäumvorgang dient die Dichtung 34 vorteilhaft bereits als Abdichtelement zwischen dem Unterteil 36 und dem Oberteil 37 der Schäumform.

Wie in Fig. 8 zu erkennen ist, bildet der äußere Schenkel 38 der Dichtung 34 im an der Fahrzeugkarosserie montierten Zustand des Fahrzeugdachs zum einen eine Dichtungsfläche aus, um zwischen Fahrzeugdach und Dachrahmen 39 abzudichten. Zum anderen hat der äußere Schenkel 38 der Dichtung 34 aufgrund seiner Elastizität eine das Fahrzeugdach bezüglich des Dachrahmens 39 zentrierende Wirkung. Die Dichtung 34 besteht wie schon die Dichtungen in den vorangehend erläuterten Ausführungsbeispielen aus einem Werkstoff, der den insbesondere thermischen und mechanischen Beanspruchungen in der Schäumform und im am Fahrzeugdach montierten Zustand des Fahrzeugdachs hinreichend widerstehen kann, z.B. Moosgummi oder EPDM. Die Fig. 8 veranschaulicht schließlich noch, wie das Fahrzeugdach mittels einer in einer Nut 40 aufgenommenen Klebstoffraupe 41 mit dem Dachrahmen 39 der Fahrzeugkarosserie verbunden ist.

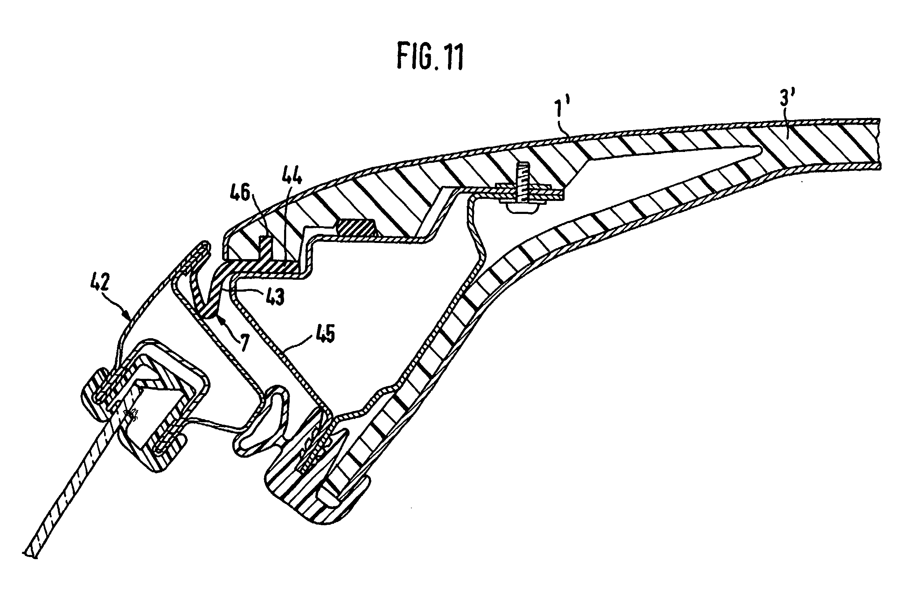

Bei der in Fig. 11 dargestellten Variante ist die Dichtung 7 ebenfalls an den Rand der Kunststoffschicht 3' eines Dachmoduls angeschäumt und liegt oberen Randinnenflächen der geschlossenen Tür 42 mit einer etwa V-förmigen elastischen Dichtungsleiste 43 an zwei Stellen dicht an. Die Dichtungsleiste 43 geht von einem Befestigungsflansch 44 aus, welcher zum einen die Kunststoffschicht 3' begrenzt und auch Abdichtelement in der Schäumform beim Schäumvorgang ist und zum anderen zwischen dem Dachmodul und einem zugeordneten Flansch des Dachrahmens 45 bei montiertem Dachmodul abdichtet. Im gezeigten Beispiel hat der Befestigungsflansch 44 noch einen nach oben ragenden Vorsprung 46, der beim Aufschäumen der Kunststoffschicht 3' auf die Dachhaut 1' in das Kunststoffmaterial eingebettet wird und die Anschäumfläche zwischen Kunststoff und Dichtung vergrößert.

Bei der in Fig. 10 dargestellten zweiten Ausführungsform der Erfindung ist die vordere Aufkantung 16 der Außenhaut 1' des gezeigten Dachmoduls nicht die äußere Begrenzung der Kunststoffschicht 3', sondern ist mit ihrer Innenfläche und ihrer Außenfläche in die Kunststoffschicht 3' eingebettet, derart, daß sich die Kunststoffschicht 3' unterhalb der Aufkantung 16 fortsetzt und nach außen über die Aufkantung 16 mit der lippenförmigen Dichtung 8 vorsteht. Die Dichtung 8 besteht somit aus dem Material der Kunststoffschicht 3'. Die Dichtung 8 liegt der Außenfläche der Windschutzscheibe 47 unter Vorspannung dicht an. Eine entsprechende Anordnung kann an der hinteren Aufkantung vorgesehen sein, wobei hierbei die lippenförmig vorstehende Dichtung der Außenfläche der Heckscheibe der Fahrzeugkarosserie dicht anliegt.

Es wird ein Verbundbauteil, insbesondere Fahrzeugdachmodul oder Bestandteil eines Fahrzeugdachs, vorgeschlagen, bestehend aus einer starren Schicht, gebildet beispielsweise aus einem tiefgezogenen Metallblech oder einer Kunststoffolie oder einer Glasplatte und einer der Innenseite der starren Schicht aufgeschäumten Kunststoffschicht. An den Rand der Kunststoffschicht ist eine Dichtung angeschäumt, welche nach der Montage des Verbundbauteils gegenüber einem angrenzenden Bauelement der Fahrzeugkarosserie abdichtet. Die Dichtung kann aus einem elastomeren Material geformt und so ausgebildet sein, daß sie beim Aufschäumvorgang eine dichte Begrenzung gegenüber dem aufschäumenden Kunststoff bildet. Die Dichtung kann aber auch aus dem aufschäumenden Material selbst gebildet und nach Art einer Abdichtlippe geformt sein, die über den Rand der starren Schicht vorsteht.

## Patentansprüche

1. Verbundbauteil für Fahrzeugkarosserien, insbesondere für Fahrzeugdächer, mit einer starren Schicht (1, 1', 2) und einer der Innenseite der starren Schicht aufgeschäumten Kunststoffschicht (3, 3', 4), **dadurch gekennzeichnet, daß** an den Rand der Kunststoffschicht (3, 3', 4) eine Dichtung (5, 6, 7, 8, 34) angeschäumt ist.

2. Verbundbauteil nach Anspruch 1, **dadurch gekennzeichnet, daß** die Dichtung (5, 6, 7, 34) aus einem elastomeren Material geformt und mit einem Teilbereich ihres Umfangs an die Kunststoffschicht (3, 3', 4) angeschäumt ist.

3. Verbundbauteil nach Anspruch 1, **dadurch gekennzeichnet, daß** die Dichtung (8) aus dem Material der Kunststoffschicht (3') und damit einteilig geformt ist und über den Rand der starren Schicht (1') lippenförmig vorsteht. (Fig. 10)

4. Verbundbauteil nach Anspruch 2, **dadurch gekennzeichnet, daß** die als Hohlkammerdichtung od.dgl. ausgebildete Dichtung (5, 6, 7) nur mit ihrem Befestigungsflansch (10, 44, 46) durch Anschäumen in die Kunststoffschicht (3') eingebettet ist.

5. Verbundbauteil nach Anspruch 4, **dadurch gekennzeichnet, daß** die Hohlkammerdichtung (5, 6) wenigstens im Bereich ihres Befestigungsflansches (10) aus einem Material geformt ist, das mit dem Material der Kunststoffschicht (3, 3') beim Anschäumen keine Bindung eingeht, so daß die Hohlkammerdichtung (5, 6) austauschbar ist.

6. Verbundbauteil nach Anspruch 5, **dadurch gekennzeichnet, daß** der Befestigungsflansch (10) mit Rippen (11) versehen ist, welche lösbar mit durch Anschäumen gebildeten hinterschnittenen Vertiefungen in der Kunststoffschicht (3, 3', 4) formschlüssig eingreifen.

7. Verbundbauteil nach Anspruch 2, **dadurch gekennzeichnet, daß** die Dichtung (34) einen zweischenkligen U-förmigen Querschnitt aufweist und auf eine Aufkantung (16) des Randes der starren Schicht (1') aufgesteckt ist, wobei der innere Schenkel (35) der Dichtung (34) an die Kunststoffschicht (3') angeschäumt ist, während der äußere Schenkel (38) die Dichtungsfläche bildet. (Fig. 8, 9)

8. Verbundbauteil nach einem der Ansprüche 4 bis 6 oder 7, **dadurch gekennzeichnet, daß** die Dichtung (6, 34) bei dem Aufschäumen der Kunststoffschicht (4, 3') Abdichtelement zwischen Unterteil (28, 36) und Oberteil (33, 37) der Schäumform ist. (Fig. 5, 6; 8, 9)

9. Verbundbauteil nach einem der Ansprüche 4 bis 6, **dadurch gekennzeichnet, daß** die Dichtung (5) bei dem Aufschäumen der Kunststoffschicht (3) Abdichtelement zwischen einer Aufkantung (13) der starren Schicht (1) und dem die Kunststoffschicht (3) begrenzenden Oberteil (20') der Schäumform ist. (Fig. 4)

10. Verbundbauteil nach einem der Ansprüche 4 bis 6, **dadurch gekennzeichnet, daß** die Dichtung (5) bei dem Aufschäumen der Kunststoffschicht (3) Abdichtelement zwischen einer Aufkantung (13) der starren Schicht (1) und einem mit der Aufkantung (13) fluchtenden Flansch (14) eines die Kunststoffschicht (3) teilweise begrenzenden angeschäumten Führungs- und/oder Versteifungsprofils (15) ist, wobei zwischen Aufkantung (13) und Flansch (14) ein Durchtrittsspalt für den Befestigungsflansch (10) der Hohlkammerdichtung (5) vorgesehen ist. (Fig. 2, 3)

## Claims

1. Composite component for vehicle bodies, in particular for vehicle roofs, with a rigid layer (1, 1', 2) and a plastic foam layer (3, 3', 4) applied to the inner side of the rigid layer, **characterized in that** a seal (5, 6, 7, 8, 34) is attached to the edge of the plastic layer (3, 3', 4) when the foam is applied.

2. Composite component according to claim 1, **characterized in that** the seal (5, 6, 7, 34) is formed from an elastomer material and is attached with a part area of its circumference to the plastic layer (3, 3', 4) when the foam is applied.

3. Composite component according to claim 1, **characterized in that** the seal (8) is formed of the material of the plastic layer (3') and in one piece therewith and projects over the edge of the rigid layer (1') in the form of a lip (Fig. 10).

4. Composite component according to claim 2, **characterized in that** the hollow chamber seal or similarly formed seal (5, 6, 7) is embedded in the plastic layer (3') when the foam is applied only with its mounting flange (10, 44, 46).

5. Composite component according to claim 4, **characterized in that** the hollow chamber seal (5, 6) is formed at least in the area of its mounting flange (10) from a material which does not bind with the material of the plastic layer (3, 3') when the foam is applied, so that the hollow chamber seal (5, 6) can be replaced.

6. Composite component according to claim 5, **characterized in that** the mounting flange (10) is provided with ribs (11), which interlock with and are detachable from undercut recesses in the plastic layer (3, 3', 4) formed when applying the foam.

7. Composite component according to claim 2, **characterized in that** the seal (34) has a two-legged U-shape cross section and is placed on an edge (16) at the edge of the rigid layer (1'), wherein the inner leg (35) of the seal (34) is attached to the plastic foam layer (3') when applying the foam, whilst the outer leg (38) forms the sealing surface (Fig. 8, 9).

8. Composite component according to claims 4 to 6 or 7, **characterized in that** the seal (6, 34) is the sealing element between the lower part (28, 36) and the upper part (33, 37) of the foam mold when the plastic foam layer (4, 3') is applied by foaming (Fig. 5, 6; 8, 9).

9. Composite component according to one of the claims 4 to 6, **characterized in that** the seal (5) is the sealing element between an edge (13) of the rigid layer (1) and the upper part (20') of the foam mold bordering the plastic foam layer (3) when the plastic foam layer (3) is applied by foaming (Fig. 4).

10. Composite component according to one of the claims 4 to 6, **characterized in that**, when the plastic foam layer (3) is applied by foaming, the seal (5) is the sealing element between an edge (13) of the rigid layer (1) and a flange (14) which is flush with the edge (13), of a guide and/or reinforcing profile (15) attached by foaming and partly bordering the plastic layer (3), wherein an entry gap for the mounting flange (10) of the hollow chamber seal (5) is provided between the edge (13) and flange (14) (Fig. 2, 3).

## Revendications

1. Pièce composite pour des carrosseries de véhicules, en particulier pour des toits de véhicules, comprenant une couche rigide (1, 1', 2) et une couche en matière plastique (3, 3', 4) appliquée par moussage sur la face intérieure de la couche rigide, **caractérisée en ce qu'**un joint (5, 6, 7, 8, 34) est rapporté par moussage sur la bordure de la couche en matière plastique (3, 3', 4).

2. Pièce composite selon la revendication 1, **caractérisée en ce que** le joint (5, 6, 7, 34) est formé à partir d'un matériau élastomère et est rapporté par moussage sur la couche en matière plastique (3, 3', 4) par une zone partielle de sa circonférence.

3. Pièce composite selon la revendication 1, **caractérisée en ce que** le joint (8) est formé à partir du matériau de la couche en matière plastique (3') et est d'un seul tenant avec celle-ci, et dépasse en forme de lèvre du bord de la couche rigide (1') (figure 10).

4. Pièce composite selon la revendication 2, **caractérisée en ce que** le joint (5, 6, 7), réalisé comme joint à chambre creuse ou similaire, est noyé par moussage dans la couche en matière plastique (3') uniquement par sa bride de fixation (10, 44, 46).

5. Pièce composite selon la revendication 4, **caractérisée en ce que** le joint à chambre creuse (5, 6) est formé, au moins dans la zone de sa bride de fixation (10), à partir d'un matériau qui n'établit aucune liaison avec le matériau de la couche en matière plastique (3, 3') lors du moussage, de sorte que le joint à chambre creuse (5, 6) est remplaçable.

6. Pièce composite selon la revendication 5, **caractérisée en ce que** la bride de fixation (10) est munie de nervures (11) qui s'engagent de manière détachable par coopération de formes dans la couche en matière plastique (3, 3', 4) par des renfoncements en contre-dépouille formés par moussage.

7. Pièce composite selon la revendication 2, **caractérisée en ce que** le joint (34) présente une section transversale en forme de U à deux bras et est emboîté sur un rabattement (16) du bord de la couche rigide (1'), le bras intérieur (35) du joint (34) étant rapporté par moussage à la couche en matière plastique (3'), tandis que le bras extérieur (38) forme la surface d'étanchéité (figures 8, 9).

8. Pièce composite selon l'une des revendications 4 à 6 ou 7, **caractérisée en ce que** le joint (6, 34) est, lors de l'application par moussage de la couche en matière plastique (4, 3'), un élément d'étanchement entre une partie inférieure (28, 36) et une partie supérieure (33, 37) du moule de moussage (figures 5, 6, 8, 9).

9. Pièce composite selon l'une des revendications 4 à 6, **caractérisée en ce que** le joint (5) est, lors de l'application par moussage de la couche en matière plastique (3), un élément d'étanchement entre un rabattement (13) de la couche rigide (1) et la partie supérieure (20') limitant la couche en matière plastique (3) du moule de moussage (figure 4).

10. Pièce composite selon l'une des revendications 4 à 6, **caractérisée en ce que** le joint (5) est, lors de l'application par moussage de la couche en matière plastique (3), un élément d'étanchement entre un rabattement (13) de la couche rigide (1) et une bride (14), qui est en alignement avec le rabattement (13), d'un profil de guidage et/ou de rigidification (15) rapporté par moussage et limitant partiellement la couche en matière plastique (3), une fente de passage étant prévue entre le rabattement (13) et la bride (14) pour la bride de fixation (10) du joint à chambre creuse (5) (figures 2, 3).
